# EUROPEAN PATENT APPLICATION

(11) **EP 3 280 184 A1**
(43) Date of publication of application: **07.02.2018**
(21) Application number: 16306006.4
(22) Date of filing: 03.08.2016
(51) Int. Cl.: H04W 40/22, H04W 88/04

(54) **METHOD AND APPARATUS FOR MOBILE DEVICE RELAY**

(71) Applicant: Thomson Licensing, 92130 Issy-les-Moulineaux (FR)
(72) Inventor: ONNO, Stephane, 35576 Cesson Sévigné (FR); Guegant, Jean, 35576 Cesson Sévigné (FR); LEGUILLON, Valerie, 35576 Cesson Sévigné (FR)
(74) Representative: Huchet, Anne

(57) **Abstract**

A method and an apparatus for mobile device roaming are provided. The apparatus comprises: an information obtaining unit for obtaining information about the network capability at a given location of at least two mobile devices including a first mobile device and a second mobile device; a predicting unit for calculating a gateway function score of each of the at least two mobile devices at the given location according to the obtained information about the network capabilities; and a roaming unit for switching the traffic of the first mobile device to the access network of the second mobile device according to respective calculated gateway function scores of the at least two mobile devices.

## Description

### TECHNICAL FIELD

The present disclosure relates generally to the field of wireless data communication. More specifically, the present disclosure relates to method and apparatus for mobile device roaming.

### BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Different mobile devices may have data services from different service providers with different networks. For example, in a moving car, the driver and the passengers may own several mobile devices, which access internet service with respective service providers. When the car is moving, some of the mobile devices will access the data service with erratic bandwidth depending on the location and the speed of the car. In such case, there is a need to aggregate the bandwidth of these mobile devices, which access data services with different networks.

### SUMMARY

The present disclosure will be described in detail with reference to exemplary embodiments. However, the present disclosure is not limited to the exemplary embodiments.

According to a first aspect of the present principles, there is provided an apparatus for mobile device roaming, comprising: an information obtaining unit for obtaining information about the network capability of at least two mobile devices at a given location; a predicting unit for calculating a gateway function score of each of the at least two mobile devices at the given location according to the obtained information about the network capabilities; and a roaming unit for switching the traffic of a first mobile device to the access network of a second mobile device according to respective calculated gateway function scores of the at least two mobile devices.

In an embodiment, the information about the network capability of a mobile device comprises the mobile information which is the dynamic information that each mobile device receives or collects from the network in term of the network capacity and the path coverage information which relates to the network capacity of the mobile devices by respective network providers at the geographical route that the mobile devices are travelling.

In an embodiment, the path coverage information is obtained from the selected roaming path in GPS (Global Positioning System).

In an embodiment, the predicting unit calculates the gateway function score as a function of one coverage parameter of the obtained information about the network capability.

In an embodiment, the network capacity is the available bandwidth of a mobile device.

In an embodiment, the switching of the traffic is implemented by a virtual gateway based on the OpenFlow protocol.

According to a second aspect of the present principles, there is provided a method for mobile device roaming, comprising the steps of: obtaining information about the network capability of at least two mobile devices at a given location; calculating a gateway function score of each of the at least two mobile devices at the given location according to the obtained information about the network capabilities; and switching the traffic of a first mobile device to the access network of a second mobile device according to respective calculated gateway function scores of the at least two mobile devices.

In an embodiment, the information about the network capability of a mobile device comprises the mobile information which is the dynamic information that each mobile device receives or collects from the network in term of the network capacity and the path coverage information which relates to the network capacity of the mobile devices by respective network providers at the geographical route that the mobile devices are travelling.

In an embodiment, the path coverage information is obtained from the selected roaming path in GPS (Global Positioning System).

In an embodiment, the gateway function score is calculated as a function of one coverage parameter of the obtained information about the network capability.

In an embodiment, the network capacity is the available bandwidth of a mobile device.

In an embodiment, the switching of the traffic is implemented by a virtual gateway based on the OpenFlow protocol.

According to a third aspect of the present disclosure, there is provided an apparatus, comprising a processor configured to: obtain information about network capability at a given location of at least two mobile devices including a first mobile device and a second mobile device; calculate a gateway function score of each of the at least two mobile devices at the given location according to the obtained information about the network capabilities; and switch the traffic of a first mobile device to the access network of a second mobile device according to respective calculated gateway function scores of the at least two mobile devices.

According to a fourth aspect of the present disclosure, there is provided a computer program product downloadable from a communication network and/or recorded on a medium readable by computer and/or executable by a processor, comprising program code instructions for implementing the steps of a method according to the second aspect of the disclosure.

According to a fifth aspect of the present disclosure, there is provided Non-transitory computer-readable medium comprising a computer program product recorded thereon and capable of being run by a processor, including program code instructions for implementing the steps of a method according to the second aspect of the disclosure.

### BRIEF DESCRIPTION OF THE DRAWINGS

The above and other objects, features, and advantages of the present disclosure will become apparent from the following descriptions on embodiments of the present disclosure with reference to the drawings, in which:
Figure 1 is an exemplary diagram showing an apparatus for mobile device roaming according to an embodiment of the present disclosure
Figure 2 is a block diagram showing the main components of an OpenFlow switch;
Figure 3 is an exemplary diagram illustrating a virtual gateway;
Figure 4 is a block diagram showing a roaming application implemented on a virtual gateway solution according to an embodiment of the present disclosure; and
Figure 5 is a flow chart showing a method for mobile device roaming according to an embodiment of the present disclosure.

### DETAILED DESCRIPTION OF THE PREFERRED EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

An embodiment of the present disclosure provides an apparatus for mobile device roaming.

The apparatus can provide a roaming of traffic among a plurality of mobile devices used in a confined space, for example, in a car, which access the internet service by respective access networks. The car may be moving along a predetermined route, in which case even at the same location the mobile devices may have different bandwidths for the internet service. With the apparatus of the embodiment of the disclosure, a score of an expected bandwidth of the internet access of different access networks at a given location is calculated. Based on the score, a network is selected for a mobile device which will then roam the data traffic to the selected network accordingly.

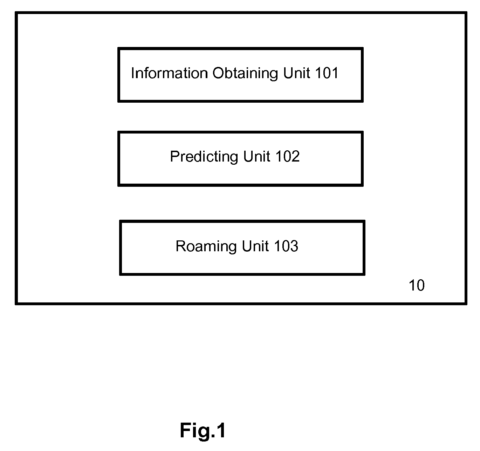

Figure 1 is an exemplary diagram showing an apparatus for mobile device roaming according to an embodiment of the disclosure.

As mentioned above, different mobile devices may have data services from different service providers with different networks. For example, mobile devices in a car can access network services with different types of network, such as 3G, 4G, HSPA+ links of respective service providers. It can be appreciated that the bandwidths available for these mobile devices may be different even if they are at the same location.

The apparatus 10 can provide a switching function for a mobile device to roam the traffic to a network with better network capacity. The apparatus 10 can be implemented on at least one of the mobile devices.

As shown in Figure 1, the apparatus 10 comprises an information obtaining unit 101 for obtaining information about the network capability of each mobile device at a given location.

The information about the network capability of a mobile device relates to the actual bandwidth of the mobile device available for a network service at a given location. It can be appreciated that the bandwidth can be shared by several users using the same cell at a given time and there is a maximum limit allocated per user potentially. Some known software can be used to obtain/monitor the information about the network capability of a mobile device. Such information can also be provided by network service operators. In addition, it is also possible that the information about the expected bandwidth is published according to the request of regulatory authorities.

In an example, the information about the network capability of a mobile device can be obtained according to the mobile information and the path coverage information.

The mobile information is the dynamic information that each mobile device receives or collects from the network in term of the network capacity. An example of the mobile information is the network indicator, such as edge, 3g, HSPA+, 4G and xG. The signal strength value is another type of the mobile information, which is for example the number of signal bars or the analog power ratio (in Db). The variation slope of the signal strength value can also be the mobile information, which indicates the increasing, decreasing or flat as well as cell information (roaming state of the cell for example) and can be used to estimate the bandwidth which is coming soon. Other kind of information, such as the battery status of the mobile device, can also be considered as the mobile information.

The mobile information can be obtained or determined from the mobile device itself. For example, it can obtain from the mobile device the network indicator (such as edge; HSPA+, 3G, 4G, 5G), the network strength (by signal bars for example of 0, 1, 2, 3, 4) and the network variation slope (derivative function). Specifically, this can be achieved by analyzing the information from the OS (Operating System API (Application Programming Interface) and the network signal strength.

The path coverage information relates to the network capacity of the mobile devices by respective network providers at the geographical route that the mobile devices are travelling.

The path coverage information can be obtained for the selected roaming path in GPS (Global Positioning System). When the user inputs his waypoint of destination with GPS, he/she chooses a route among the routes that the GPS function computes for the travel. This selected roaming path can be the starting point to get the coverage map. User can enters his destination route before starting at his current geographical position. Below is an example of the selected roaming path, which comprises selected mobile device and operator used for the possible roaming:
- Path (Paris to Marseilles)
- Mobile A (operator A), Master
- Mobile B (Operator B), Slave

Please note that operator type Master/Slave which will be discussed later is an element extracted from the mobile information.

The coverage map of the selected roaming path can be obtained for each network provider. Some mobile applications from independent mobile providers use crowdsourcing data to provide coverage map. For example, an independent coverage map for France was provided by an organization of QUE CHOISIR (www.quechoisir.org), which can be obtained from its website or from Sensorly android/IOS app. A static coverage map can be downloaded from a coverage map application for example which updates regularly the coverage according to crowdsource information. As an example of crowdsource, the google Map can be used feedback from android user to get traffic jam indication.

Some telecom authorities may also publish information about the coverage map. An example of the coverage map is published by ARCEP (Autorite de regulation des communications 6lectroniques et des postes), which is an interactive map for motorways, rail, metro.

The full interactive map for each town will be available in 2017, However, Europe 1 French radio has published an excerpt for 4G. For example, when clicking on a town, the below information can be obtained:
4G: Best of all operators, 78 % of the town is covered 4G;
20 % coverage 4G for Bouygues; 46 % coverage for Free; 78 % coverage for Orange; 60 % coverage for SFR.

Another path coverage information is the roaming map which is a static map indicating where to roam from one network provider to another. The roaming map can be obtained from each coverage map. The expected coverage at each point along the route is the optimal from the different coverage map of the network provider in use. The Roaming map is an aggregation of the best (Operator A, Operator B) from crowdsource information or computed locally. An example of the best expected roaming plan is as below:
- OpA at geo X during 2 km
- OPb at geo Y for 4 km,

The roaming map can be saved for further trips and even stored and aggregates all the decision point as a central service for other users implementing the apparatus of the present disclosure.

The apparatus 10 comprises a predicting unit 102 for calculating a gateway function score of each mobile device at the given location according to the obtained information about the network capabilities.

The gateway function score can be calculated as a function of one coverage parameter of the obtained information about the network capability. For example, the score can be based on the network speed, wherein the fastest speed of 5Mbs and above is assigned the score of 20/20. Signal strength can also be used as a parameter for calculating the gateway function score. The signal strength is measured as dBm. The closer to 0, the better signal strength. According to an app called CoverageMap, the service performance can be measured based on the signal strength as below: Good -96 to -50 dBm; Fair -108 to -97 dBm; Poor -115 to -109 dBm; Bad -116 dBm and below. A score can be assigned accordingly.

The gateway function score can also be calculated as a function of more than one parameters of the obtained information about the network capability, such as the call performance, the network speed, the signal strength, the access technology, the date/time of a day and so on. For example, as for the access technology, LTE is believed to be the newest, fastest mobile technology, 3G+ the transitional bridge between older technologies and LTE, and 2G/3G slower mobile network technologies. Scores from high to low can be assigned to the above access technology. The parameters can be assigned a weight for calculating the score, which is linked to the user configuration. For example, for web browsing data, a high weight will be assigned to the network speed wherein the data will be download at higher speed even if the signal strength decreases.

The parameters for the calculation, such as the signal strength and network indicators, can be updated in real time. In this case, the information can be consolidated dynamically to obtain the gateway function score. Then, at each sampling point of the route, the score can be re-calculated. The mentioned sampling can be on a distance basis (every km) along the route, or on a timing based (every 30 seconds). The sampling can be adjusted according to the particular dense (Towns)/sparse (Countryside) zone, the remaining data plan, or the battery status. In an example, a new sampling of dynamic information should be done when a new static value is considered on the coverage map. Assume the sampling is done every km but the coverage map indicates that a roaming must occurs at geo +1.5 km, then a specific dynamic information sampling is done a 1.5 km in this case.

The apparatus 10 comprises a roaming unit 103 for switching the traffic of a first mobile device to the access network of a second mobile device according to respective calculated gateway function scores of the mobile devices.

The apparatus 10 can be implemented as a roaming application on a mobile device and the switching of the traffic is implemented by a virtual gateway solution which provides means for switching and routing on a mobile device based on the OpenFlow protocol. The virtual gateway acts as the default gateway to control the switch that will mediate all Internet access from each mobile device. Then it computes the routing decision with respect to high level user or machine learning rules and sends the corresponding flow rules to the switch. The switch applies the flow rules which relies on forwarding the packets to an output port applying a route to Internet via the targeted gateway.

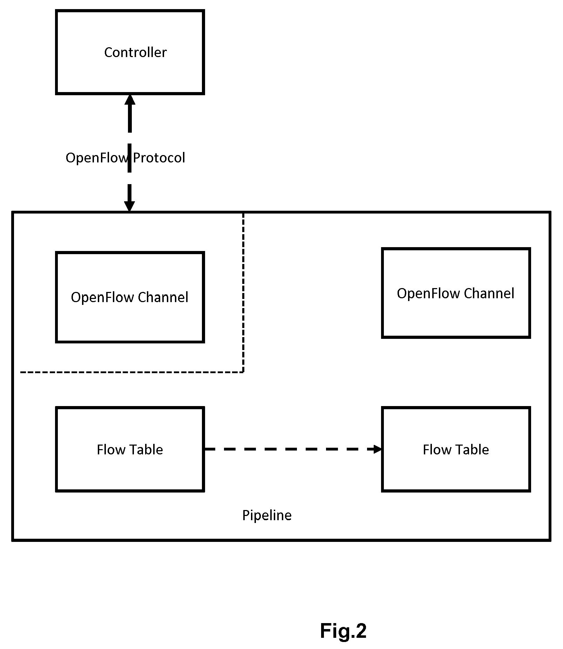

OpenFlow is a communication protocol that gives access to the forwarding plane of a network switch or router over the network. OpenFlow enables controllers to determine the path of network packets through the network of switches. Figure 2 is a block diagram showing the main components of an OpenFlow switch in the OpenFlow Switch Specification, Version 1.4.0 (Wire Protocol 0x05), October 14, 2013. As shown in Figure 1, an OpenFlow switch consists of one or more flow tables, which perform packet lookups and forwarding, and an OpenFlow channel to an external controller. Each flow table in the switch contains a set of flow entries; and each flow entry consists of match fields, counters, and a set of instructions to apply to matching packets. The switch communicates with the controller and the controller manages the switch via the OpenFlow protocol, which defines messages, such as packet-received, send-packet-out, modify-forwarding-table, and get-stats. Using the OpenFlow protocol, when an OpenFlow Switch receives a packet it has never seen before, for which it has no matching flow entries, it sends this packet to the controller. The controller then makes a decision on how to handle this packet. The controller can add, update, and delete flow entries in flow tables, both reactively (in response to packets) and proactively.

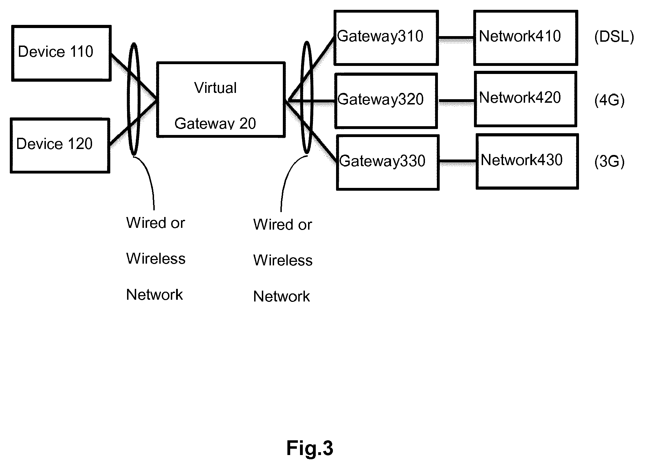

Figure 3 illustrates a virtual gateway (VG) 20 having a LAN interface and including a virtual gateway application 211, an OpenFlow controller 205 and an OpenFlow switch 220 (see FIG. 2). The virtual gateway 20 is used as a default gateway for each of devices 110, 120, 310, 320 and 330 in a network. Note that the OpenFlow switch 220 can be implemented also in an apparatus/device other than an apparatus/device in which the virtual gateway application 211 and the OpenFlow controller 205 are implemented.

The virtual gateway 20 mediates all default gateway requests, i.e., an Internet access from each device in the network and computes a routing decision with respect to a high level user defined or Machine Learning (ML) rules. As a result, the virtual gateway 20 (actually, the virtual gateway application 211, described later) generates and transmits corresponding flow rules ("flow entries") to the switch 220. The rules include at least a "matching header" (e.g. an IP destination, a MAC source and/or the like) and a set of actions (e.g. transmitting a packet to a DSL gateway 310 or a mobile gateway 320/330, changing a destination of a packet, and/or the like). Each subsequent device request that matches a given rule will be automatically redirected to the corresponding network gateway (implemented in respective access link devices 310, 320 or 330). The access link device (i.e., the network gateway) then accesses the corresponding access network 410, 420 or 430.

The roaming application according to the embodiment of the disclosure can be based on the virtual gateway solution to mediate mobile requests. When a new access is sent (e.g. new IP address), the virtual gateway sends the first packet to the roaming application which in turn sends back a new switching rule for the IP address. This process will be carried out until the time expires and again and so forth. This can be called the reactive mode. There is a proactive mode, wherein the roaming application can decide to modify the switch rule, for example, based on the coverage map. In this case the previous flow can be modified, wherein all the traffic coming from a mobile device with MAC 11:22:22:33:44:55:66 will be forwarded from the gateway function 1 to the gateway function 2, for example, from the mobile operator 1 to the mobile operator 2.

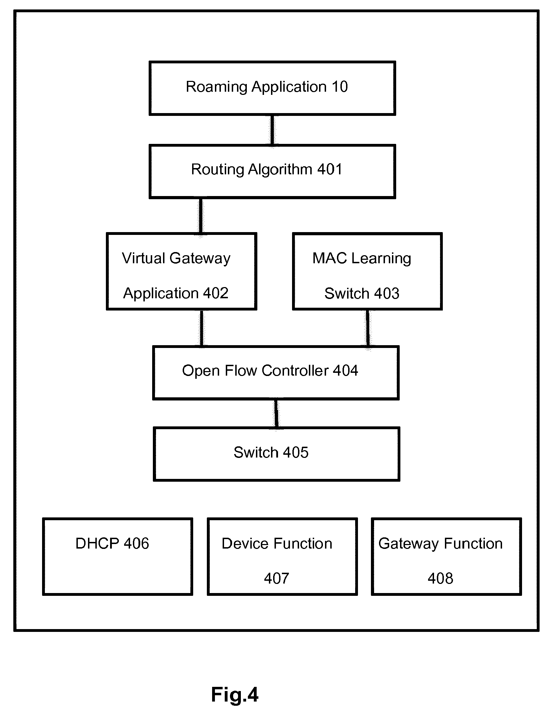

Figure 4 is a block diagram showing a roaming application implemented on a virtual gateway solution according to an embodiment of the present disclosure.

The virtual gateway shown in Figure 4 includes an OpenFlow controller 404, an OpenFlow switch 405, a virtual gateway application 402, a MAC learning switch 403 and a routing algorithm 401. The roaming application 10 and the virtual gateway can be implemented in a mobile device which also comprises a DHCP function 406, a device function 407 and a gateway function 408. It can be appreciated that other mobile devices in the network can also have respective DHCP function, device function and gateway function.

In the virtual gateway shown in in Figure 4, the routing decision is computed according to the routing algorithm 401 based on ML rules, user defined rules and/or the like. The routing algorithm 401 can be implemented in a form of a data file. The virtual gateway application 402 works together with the MAC learning switch 403 to carry out traffic switching operations in order to enable routing operations in the virtual gateway application 402.

The virtual gateway application 402 has a number of functions. A first function is to hook an ARP request from each of the device functions for the IP address of the virtual gateway. A second function is to apply given user defined rules or ML rules (or policy) into OpenFlow entries (i.e., "flow entries"). A third function is to send the flow entries to the switch 404. A fourth function is to behave as a virtual device such as replying to a ping request or acquiring access link device capabilities.

The OpenFlow switch 405 has a number of functions. A first function F310 is to apply the given flow entries to its flow tables. A second function is to determine a match between the header of given traffic (a packet or so) and its flow entries. A third function, if matching, is to route the packet or so on a corresponding interface meaning the corresponding access link device otherwise to raise an event to the virtual gateway.

A DHCP function 406 is configured to transmit the IP address of the virtual gateway as a default gateway IP address for any of the mobile devices in the network.

As shown in Figure 4, the roaming application 10 interacts with a virtual gateway to implement the roaming process described above.

Prior to configure the rules, Mac Learning switch 403 binds a MAC address to a port. It operates on the LAN (Local Area Network) and learns which Mac address is bound to a given physical Port for all LAN devices. Traffic of all the LAN devices are handled by the Mac Learning switch 403.

DHCP function 406 configures the default gateway as the virtual gateway (all Traffic to the Internet). And the virtual gateway hooks IP of destination address to the Internet.

If there is a new connection appears with a new IP and the switch 405 have no rule for that IP Address, the virtual gateway will hook every new packet and get destination IP and then notifies the roaming application 10 that a new IP appears. The roaming application 10 computes and select the gateway function to which the traffic of the new IP will be steered. Then the roaming application 10 will send the indication to the routing algorithm 401 which in turn translates the indication into flow rules. Then the flow rules will be sent to the switch 405. Each subsequent packet will be directly forwarded to the selected gateway function.

The roaming application 10 can be implemented on one or more mobile devices in the network. If several roaming applications are installed on several mobile device respectively, a master can be elected. The master is the roaming application which takes the routing decisions. A policy can be set to elect the master. For example, the mobile device that appears the first on a given network will be the master. In that configuration, the other mobile devices running the roaming application can disable their routing functions and only enable the gateway function in order to only provide the access to the Internet. In the case that there are several roaming applications operating in a given network, there will bring also several switch functions. Although a master runs the routing algorithm to control all the routing decisions, the routing algorithm may send different routing decisions to each roaming application, i.e. different OpenFlow switch. An OpenFlow controller can control several OpenFlow switches and can compute routing decisions accordingly. For example, if the decision relies on the routing of the local traffic of the mobile to its gateway, the routing algorithm sets a flow entry on the switch of the mobile device to match the internet traffic towards its own mobile access network. As a result, the traffic will flow directly and a round trip to the other switch can be avoided.

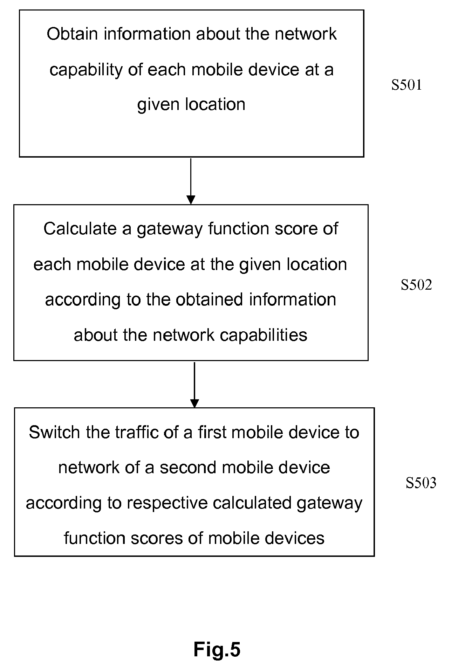

Figure 5 is a flow chart showing a method for mobile device roaming according to an embodiment of the present disclosure.

As described above, the method can be used for at least two mobile devices in a car to switch the internet traffic to a mobile device with better network capacity.

At step S501, it obtains information about the network capability of at least two mobile devices at a given location. The information about the network capability of a mobile device can comprise the mobile information which is the dynamic information that each mobile device receives or collects from the network in term of the network capacity and the path coverage information which relates to the network capacity of the mobile devices by respective network providers at the geographical route that the mobile devices are travelling.

At step S502, it calculates a gateway function score of each of the at least two mobile devices at the given location according to the obtained information about the network capabilities. The gateway function score can be calculated as a function of one or more coverage parameters of the obtained information about the network capability.

At step S503, it switches the traffic of a first mobile device to the access network of a second mobile device according to respective calculated gateway function scores of the at least two mobile devices.

According to the roaming method, the traffic of a mobile device can switch to the network of a mobile device with better network capacity.

It is to be understood that the present disclosure may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

## Claims

1. An apparatus for mobile device roaming, comprising:
an information obtaining unit (101) for obtaining information about network capability at a given location of at least two mobile devices including a first mobile device and a second mobile device;
a predicting unit (102) for calculating a gateway function score of each of the at least two mobile devices at the given location according to the obtained information about the network capabilities; and
a roaming unit (103) for switching the traffic of the first mobile device to the access network of the second mobile device according to respective calculated gateway function scores of the at least two mobile devices.

2. The apparatus according to claim 1, wherein the information about the network capability of a mobile device comprises mobile information which is the dynamic information that each mobile device receives or collects from the network in term of the network capacity and path coverage information which relates to the network capacity of the mobile devices by respective network providers at a geographical route that the mobile devices are travelling.

3. The apparatus according to claim 2, wherein the path coverage information is obtained from the selected roaming path in GPS (Global Positioning System).

4. The apparatus according to claim 1, wherein the predicting unit (102) calculates the gateway function score as a function of one coverage parameter of the obtained information about the network capability.

5. The apparatus according to claim 1, wherein the network capacity is the available bandwidth of a mobile device.

6. The apparatus according to claim 1, wherein the switching of the traffic is implemented by a virtual gateway based on the OpenFlow protocol.

7. A method for mobile device roaming, comprising:
obtaining (S501) information about network capability at a given location of at least two mobile devices including a first mobile device and a second mobile device;
calculating (S502) a gateway function score of each of the at least two mobile devices at the given location according to the obtained information about the network capabilities; and
switching (S503) the traffic of a first mobile device to the access network of a second mobile device according to respective calculated gateway function scores of the at least two mobile devices.

8. The method according to claim 7, wherein the information about the network capability of a mobile device comprises a mobile information which is the dynamic information that each mobile device receives or collects from the network in term of the network capacity and a path coverage information which relates to the network capacity of the mobile devices by respective network providers at a geographical route that the mobile devices are travelling.

9. The method according to claim 8, wherein the path coverage information is obtained from the selected roaming path in GPS (Global Positioning System).

10. The method according to claim 7, wherein the gateway function score is calculated as a function of one coverage parameter of the obtained information about the network capability.

11. The method according to claim 7, wherein the network capacity is the available bandwidth of a mobile device.

12. The method according to claim 7, wherein the switching of the traffic is implemented by a virtual gateway based on the OpenFlow protocol.

13. An apparatus, comprising
a processor configured to:
obtain information about network capability at a given location of at least two mobile devices including a first mobile device and a second mobile device;
calculate a gateway function score of each of the at least two mobile devices at the given location according to the obtained information about the network capabilities; and
switch the traffic of a first mobile device to the access network of a second mobile device according to respective calculated gateway function scores of the at least two mobile devices.

14. Computer program product downloadable from a communication network and/or recorded on a medium readable by computer and/or executable by a processor, comprising program code instructions for implementing the steps of a method according to at least one of claims 7 to 12.

15. Non-transitory computer-readable medium comprising a computer program product recorded thereon and capable of being run by a processor, including program code instructions for implementing the steps of a method according to at least one of claims 7 to 12.
